# EUROPÄISCHE PATENTSCHRIFT

(11) **EP 2 148 994 B1**
(45) Veröffentlichungstag und Bekanntmachung des Hinweises auf die Patenterteilung: **18.03.2015**
(21) Anmeldenummer: 08735278.7
(22) Anmeldetag: 16.04.2008
(51) Int. Cl.: F16C 23/04, F16C 27/06

(54) **AUSGLEICH UMLAUFENDER WELLENSCHRÄGSTELLUNG**
COMPENSATION OF REVOLVING SHAFT SKEW
COMPENSATION D'UNE POSITION D'ARBRE OBLIQUE PÉRIPHÉRIQUE

(30) Priorität: 20.04.2007 DE 102007018796
(43) Veröffentlichungstag der Anmeldung: 03.02.2010
(73) Patentinhaber: ABI Anlagentechnik-Baumaschinen-Industriebedarf Maschinenfabrik und Vertriebsgesellschaft mbH, 63843 Niedernberg (DE)
(72) Erfinder: KLEIBL, Albrecht, 02747 Grosshennersdorf (DE); HEICHEL, Christian, 63843 Niedernberg (DE)
(74) Vertreter: Patentanwälte Dörner & Kötter PartG mbB
(86) Internationale Anmeldenummer: PCT/EP2008/003036
(87) Internationale Veröffentlichungsnummer: WO 2008/128691

(56) Entgegenhaltungen:
- WO-A-2005/075749
- DE-A1- 2 243 792
- GB-A- 1 184 644
- US-A- 1 928 114

## Beschreibung

### Gebiet der Erfindung

Die vorliegende Erfindung betrifft im Allgemeinen die Lagerung von drehbaren Wellen und insbesondere Lageranordnungen, um bei sich drehenden Wellen auftretende umlaufende Wellenverformung oder Wellendurchbiegung auszugleichen.

### Hintergrund der Erfindung

Bei drehbaren und insbesondere drehantreibbaren Wellen können im Betrieb (d.h. bei Drehung der Welle) Verformungen und insbesondere Wellendurchbiegung auftreten, wenn Kräfte nicht parallel (z.B. senkrecht oder unter einem Winkel) zur Wellenlängsachse wirken.

Man kann dabei folgende Fälle unterscheiden, nämlich solche, bei denen die Richtung von nicht parallel zur Wellenlängsachse wirkenden Kräften im Wesentlichen gleich bleibt, und solche, bei denen sich die Richtung von nicht parallel zur Wellenlängsachse wirkenden Kräften ändert und insbesondere umlaufende Radialkräfte auftreten.

Im ersten Fall ergibt sich eine im Wesentlichen ortsfeste Wellenverformung bzw. Wellendurchbiegung. Dies kann man als Umlaufverformung oder Umlauf(durch)biegung bezeichnen.

Im zweiten Fall ergibt sich eine Wellenverformung bzw. Wellendurchbiegung, deren Ausprägung bzw. Richtung sich in Abhängigkeit der Richtungsänderung der zugrunde liegenden Kräfte ändert. Dies ist insbesondere bei umlaufenden Radialkräften der Fall. Dies kann man dann - in Anlehnung an die Bezeichnung "umlaufende Radialkräfte" als umlaufende Wellenverformung oder Wellendurchbiegung bezeichnen.

Beispiele für den ersten Fall sind Papiermaschinen und Seilwinden, wo sich die Richtung von nicht parallel zur Wellenlängsachse wirkenden Kräfte nicht ändert (z.B. Kräfte aufgrund von zusammenwirkenden an Wellen angeordneten Papierwalzen; Kräfte, die auf ein an einer Seilwinde angeordnetes Seil wirken).

Beispiele für den zweiten Fall sind Schwingungserreger und Vibratoren, wo an Wellen Unwuchtmassen vorhanden sind, die mit der Welle gedreht werden und dabei bezüglich der Wellenlängsachse bzw. Drehachse umlaufende radial wirkende Kräfte erzeugen.

Um im ersten Fall eine Umlaufverformung oder Umlauf(durch)-biegung auszugleichen, ist es beispielsweise bekannt, den radial außen liegenden Teil eines Wellenlagers (z.B. Wälzlageraußenring) mit einem Gelenklager zu versehen, das eine gelenkige Verbindung z.B. mit einem Gehäuse bereitstellt.

Solche Gelenkanordnungen sind aus US 1 928 114, DE 2 243 792 und GB 1 184 644 A bekannt, die jeweils Lageranordnungen für die drehbare Lagerung des Endes einer Welle offenbaren, das mit einem inneren Lagerteil gekoppelt ist, wobei mittels einer zusätzlichen Schwenklagerung die Welle gegenüber ihrer Rotationsachse verschwenkbar ist. Die Schwenklagerung ist ortsfest angeordnet und erlaubt es, Umlaufverformungen oder Umlauf(durch)biegungen auszugleichen.

Derartige Ansätze sind jedoch nicht oder nur eingeschränkt geeignet, um im zweiten Fall (umlaufende Wellenverformung oder Wellendurchbiegung) für einen Ausgleich zu sorgen.

### Aufgabe der Erfindung

Aufgabe der vorliegenden Erfindung ist es, Lösungen bereitzustellen, die bei drehbaren Wellen auftretende umlaufende Wellenverformungen oder Wellendurchbiegungen ausgleichen.

### Kurze Beschreibung der Erfindung

Zur Lösung der obigen Aufgabe stellt die vorliegende Erfindung Anordnung gemäß dem unabhängigen Anspruch 1 bereit.

Die erfindungsgemäße Anordnung ist zur Lagerung einer um eine Rotationsachse drehbaren Welle vorgesehen und umfasst ein Lager, das einen inneren Lagerteil zur Kopplung mit einem Ende der Welle und einen äußeren Lagerteil zur Kopplung mit einer Befestigungsstruktur umfasst, und ein Halte/Schwenk-Element, das mit dem inneren Lagerteil oder dem äußeren Lagerteil verbindbar ist. Das Halte/Schwenk-Element ist ausgeführt, um das Ende der Welle gegen Bewegung in Richtung parallel zur Rotationsachse relativ zu dem Lager zu sichern und um es zu ermöglichen, das Ende der Welle gegenüber der Rotationsachse zu verschwenken.

Der Begriff "Kopplung" und damit vergleichbare Formulierungen, wie "gekoppelt", umfassen, dass zwei Bauteile unmittelbar, direkt miteinander verbunden sind, beispielsweise mittels einer oder mehreren Schraub-, Klemm-, Kleb-, Schweißverbindungen und/oder form- und/oder kraftschlüssigen Verbindungen. Der Begriff "Kopplung" und damit vergleichbare Formulierungen, wie "gekoppelt", umfassen aber auch, dass zwei Bauteile mittelbar miteinander verbunden sind, beispielsweise mit einem dazwischen angeordneten Verbindungselement und/oder -struktur.

Dem gegenüber soll mit dem Begriff "Verbindung" und mit damit vergleichbaren Formulierungen, wie "verbunden" angegeben werden, dass zwei Bauteile, z.B. wie oben beispielhaft ausgeführt, unmittelbar, direkt miteinander verbunden sind.

Die Bezeichnungen "innen" und "außen" für die Lagerteile sind gewählt, um anzugeben, dass ein innerer Lagerteil in radialer Richtung bezüglich der Rotationsachse von dieser radial geringer beabstandet ist als der entsprechende äußere Lagerteil.

Erfindungsgemäß weist der innere Lagerteil eine Aufnahme zur wenigstens teilweisen Anordnung des Halte/Schwenk-Elements darin auf.

Eine solche Aufnahme zur Anordnung des Halte/Schwenk-Elements kann eine Ausnehmung in einem bezüglich der Rotationsachse radial inneren Bereich des inneren Lagerteils umfassen.

Vorzugsweise ist dabei die Ausnehmung in einem Bereich des inneren Lagerteils ausgebildet, der verglichen mit anderen Bereichen des inneren Lagerteils in radialer Richtung bezüglich der Rotationsachse dicker ist, d.h. in radialer Richtung bezüglich der Rotationsachse eine größere Erstreckung aufweist.

Bei weiteren bevorzugten Ausführungsformen kann der äußere Lagerteil eine Aufnahme zur wenigstens teilweisen Anordnung des Halte/Schwenk-Elements darin aufweisen.

Eine solche Aufnahme zur Anordnung des Halte/Schwenk-Elements kann eine Ausnehmung umfassen.

Die Aufnahme zur Anordnung des Halte/Schwenk-Elements des inneren Lägerteils und/oder des äußeren Lagerteils kann eine Ausnehmung umfassen.

Die Aufnahme zur Anordnung des Halte/Schwenk-Elements des inneren Lagerteils und/oder des äußeren Lagerteils kann eine Ausnehmung umfassen, die als Nut mit im Wesentlichen halbkreisförmigen oder kreissegmentförmigen Querschnitt ausgebildet ist.

Bei weiteren bevorzugten Ausführungsformen kann die Ausnehmung wannen- oder topförmig oder artig ausgebildet sein.

Ferner sind Ausnehmungen vorgesehen, die durch Flächen begrenzt sind, die die Oberfläche einer Halbkugel, eines Kugelabschnitts, eines Kegels, eines Kegelstumpfs oder eines Quaders beschreiben.

Bei weiteren bevorzugten Ausführungsformen kann der innere Lagerteil einen ringförmigen oder hohlzylindrischen Bereich mit einem Innendurchmesser umfassen, der zur wenigstens teilweisen Aufnahme eines einen Außendurchmesser aufweisenden Endbereichs der Welle vorgesehen ist. Dabei kann der Innendurchmesser um ein vorbestimmtes Maß größer als der Außendurchmesser des Wellenendbereichs sein, wobei das vorbestimmte Maß dann definiert, um wie viel die Welle gegenüber der Rotationsachse verschwenkt werden kann.

Erfindungsgemäß umfasst das Halte/Schwenk-Element einen Bolzen oder einen Stift.

Der äußere Lagerteil kann eine sich im Wesentlichen parallel zur Rotationsachse erstreckende Lagerfläche und/oder eine sich im Wesentlichen senkrecht zur Rotationsachse erstreckende Lagerfläche jeweils zur Wirkverbindung mit dem inneren Lagerteil aufweisen.

Ferner kann der innere Lagerteil (auch) eine sich im Wesentlichen parallel zur Rotationsachse erstreckende Lagerfläche und/oder eine sich im Wesentlichen senkrecht zur Rotationsachse erstreckende Lagerfläche jeweils zur Wirkverbindung mit dem äußeren Lagerteil aufweisen.

Vorzugsweise ist im äußeren Lagerteil wenigstens eine Bohrung und/oder wenigstens ein Kanal zur Schmiermittelzufuhr zur der wenigstens einen Lagerfläche ausgebildet.

Erfindungsgemäß ist das Ende der Welle über das Halte/Schwenk-Element mit dem inneren Lagerteil verdrehsicher gekoppelt.

Erfindungsgemäß weist das Ende der Welle eine Aufnahme auf, um darin das Halte/Schwenk-Element wenigstens teilweise aufzunehmen.

Vorzugsweise umfasst die Aufnahme der Welle zur Anordnung des Halte/Schwenk-Elements eine Ausnehmung, die in einem bezüglich der Rotationsachse radial äußeren Bereich des Endes der Welle vorgesehen ist.

Die Aufnahme der Welle zur Anordnung des Halte/Schwenk-Elements kann eine Ausnehmung umfassen.

Die Aufnahme der Welle zur Anordnung des Halte/Schwenk-Elements kann eine Ausnehmung umfassen, die als Nut mit im Wesentlichen halbkreisförmigen oder kreissegmentförmigen Querschnitt ausgebildet sein kann.

Bei weiteren bevorzugten Ausführungsformen kann die Ausnehmung der Welle wannen- oder topförmig oder artig ausgebildet sein.

Ferner ist sind Ausnehmungen für die Welle vorgesehen, die durch Flächen begrenzt sind, die die Oberfläche einer Halbkugel, eines Kugelabschnitts, eines Kegels, eines Kegelstumpfs oder eines Quaders beschreiben.

Bei bevorzugten Ausführungsformen umfasst das Ende der Welle einen Bereich mit einem ersten Durchmesser und einen Bereich mit einem zweiten Durchmesser, der kleiner als der erste Durchmesser ist. Dabei kann der Bereich mit dem zweiten Durchmesser einen Wellenendbereich zur wenigstens teilweisen Aufnahme in dem Lager definieren.

Ein Übergang zwischen dem Bereich mit dem ersten Durchmesser und dem Bereich mit dem zweiten Durchmesser kann eine Anschlagsfläche umfassen, die beispielsweise bei einem Verschwenken der Welle gegenüber der Rotationsachse über ein zulässiges und/oder gewünschtes Maß hinaus ein weiteres Verschwenken z.B. durch Kontakt mit einer entsprechenden Fläche des inneren Lager oder der äußeren Lagerteils verhindert.

Der Übergang zwischen dem Bereich mit dem ersten Durchmesser und dem Bereich mit dem zweiten Durchmesser kann eine im Wesentlichen senkrecht zur Rotationsachse verlaufende Fläche oder einen Wellenbereich mit kontinuierlicher Durchmesseränderung umfassen.

Vorzugsweise hat das Ende der Welle und/oder der aüßere Lagerteil wenigstens eine Bohrung und/oder wenigstens einen Kanal zur Schmiermittelzufuhr, über die Schmiermittel beispielsweise dem inneren Lagerteil und/oder dem äußeren Lagerteil zugeführt werden kann.

Des weiteren stellt die vorliegende Erfindung einen Schwingungserreger bereit, der eine erfindungsgemäße Anordnung umfasst.

Bei dem Schwingungserreger kann wenigstens eine mittels der Welle drehbare Unwuchtmasse vorgesehen sein.

### Kurze Beschreibung der Zeichnungen

Im Folgenden sind bevorzugte Ausführungsformen der vorliegenden Erfindung unter Bezugnahme auf die beigefügte Zeichnung beschrieben, die zeigen:
- Fig. 1: eine schematische Schnittdarstellung einer Ausführungsform der vorliegenden Erfindung; und
- Fig. 2: eine weitere schematische Schnittdarstellung der Ausführungsform von Fig. 1.

### Beschreibung bevorzugter Ausführungsformen

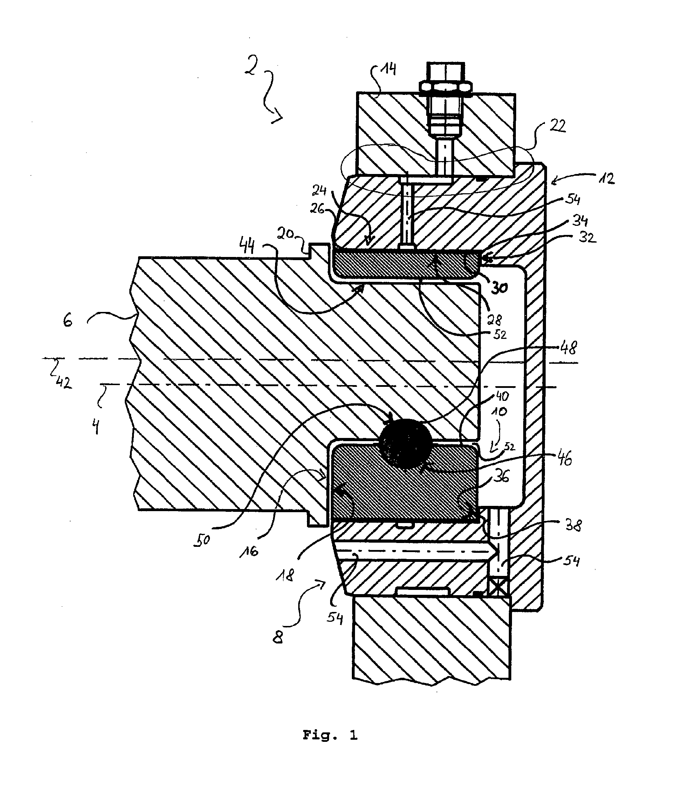

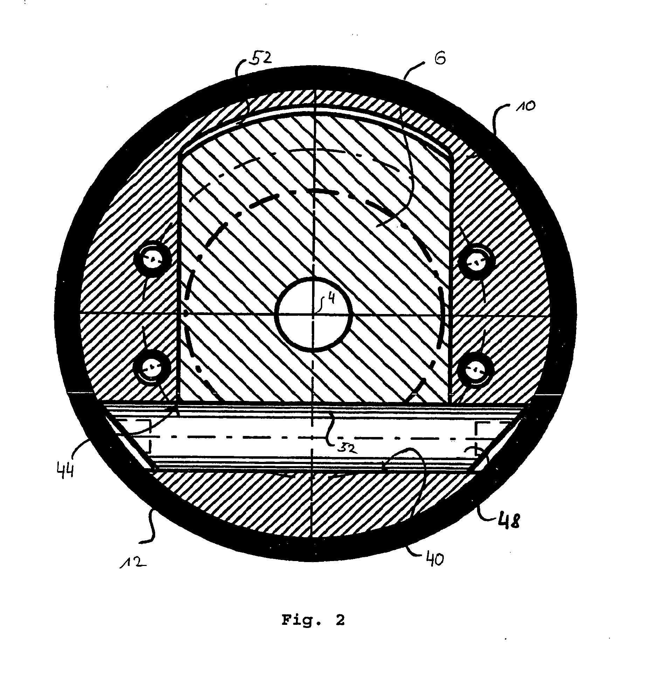

Fig. 1 und 2 zeigen bevorzugte Ausführungsformen der vorliegenden Erfindung, die beispielsweise bei einem Schwingungserreger oder Vibrator verwendet werden oder ein Bestandteil davon sein kann. Ein Bespiel für einen Schwingungserreger oder Vibrator ist z.B. in WO 2005/075749 A1 beschrieben. Im Folgenden ist zur Veranschaulichung auf eine Anwendung der vorliegenden Erfindung bei einem Schwingungserreger Bezug genommen; wie bereits oben ausgeführt beschränken sich Anwendung der vorliegenden Erfindung aber nicht auf derartige Vorrichtungen, sondern sind überall dort vorgesehen, wo umlaufende Wellenverformungen und/oder Wellendurchbiegungen ausgeglichen werden sollen.

Schwingungserreger und Vibratoren erzeugen mittels einer oder mehreren an einer oder mehreren Wellen angeordneten Unwuchtmassen Schwingungen und/oder Vibrationen, die beispielsweise auf Rammgut (z.B. Spundbohlen, Träger etc.) übertragen werden, das in Erdreich eingebracht werden soll.

Dabei treten durch Drehung der Unwuchtmasse(n) Kräfte und insbesondere Fliehkräfte auf, die auf die Lager der Welle(n) wirken. Ferner sind die Lager hohen Drehzahlen unterworfen. Da die Drehzahleignung von Lagern und insbesondere Wälzlagern mit steigender Tragzahl abnimmt, sind die Belastungsgrenzen handlesüblicher Lager (z.B. Wälzlager) einschränkend. Die Verwendung von Gleitlagern, wie z.B. in WO 2005/075749 A1 beschrieben, stellt gegenüber Wälzlagern eine Verbesserung dar.

Wie eingangs ausgeführt verformt (verbiegt) sich beim Betrieb die Welle eines Schwingungserregers aufgrund von durch die Drehung einer oder mehreren Unwuchtmassen entstehenden Kräfte. Die Verformung/Durchbiegung der Welle kann bewirken, dass sich die gelagerten Wellenenden in ihren Lagern verkanten und in den Lagern (z.B. Gleitlagern) Kantenpressung auftritt. Dies ist insbesondere bei zunehmender Drehzahl und/oder größerer Unwuchtmasse möglich, weil sich dann auch die Verformung bzw. Durchbiegung vergrößert. Die Gefahr einer Kantenpressung im Lager erhöht sich, wenn - wie allgemein üblich - zur Vermeidung von (hoher) Lagerreibleistung größere Lagerbreiten verwendet werden.

Ein Verkanten der Wellenenden in ihren Lagern könnte theoretisch begrenzt werden, indem das Lagerspiel vergrößert und/oder kleiner Lagerbreiten verwendet werden. Allerdings hat ein größeres Lagerspiel zur Folge, dass eine erhöhte Flächenpressung im Lager auftreten kann und zu einem Fressen des Lager führen kann. Eine schmales Lager ist mit einem größeren Durchmesser auszuführen, um maximal zulässige Flächenpressung im Lager nicht zu überschreiten, was u.a. auch zu einem größeren Lagerspiel mit den genannten Nachteilen führt. Derartige Ansätze sind daher unzureichend.

Erfindungsgemäß wird diese Problematik gelöst, indem bei drehbaren Wellen auftretende umlaufende Wellenverformungen und/oder Wellendurchbiegungen dadurch ausgeglichen werden, dass ein zu lagerndes Ende einer um eine Rotationsachse drehbaren Welle so mit einem Lager gekoppelt ist, dass einerseits gegen Verschiebung bzw. Verlagerung in Richtungen parallel zur Rotationsachse relativ zum Lager verhindert werden und andererseits das Wellenende gegenüber der Rotationsachse verschwenkbar ist

In Fig. 1 ist eine Ausführungsform einer erfindungsgemäßen Lagerordnung 2 gezeigt, die zur Lagerung einer um eine Rotationsachse 4 drehbaren Welle 6 vorgesehen ist.

Die Lageranordnung 2 umfasst ein im Ganzen mit 8 bezeichnetes Lager, das einen inneren Lagerteil 10 und einen äußeren Lagerteil 12 aufweist.

Darstellungsgemäß ist der äußere Lagerteil 12 zur Verbindung mit einer Befestigungsstruktur 14 ausgelegt und ist der innere Lagerteil 10 zur Verbindung mit einem Ende 12 der Welle 6 ausgelegt. Als Befestigungsstruktur 14 kann beispielsweise ein Gehäuse für die Wellen-Lager-Anordnung oder ein Teil davon dienen.

Das Ende der Welle 6 kann, wie in Fig. 1 veranschaulicht, im Bereich des inneren Lagerteils 10 einen gegenüber dem gemäß Fig. 1 weiter links liegenden Wellenbereich verkleinerten Durchmesser aufweisen. Diese Querschnittsänderung kann, wie in Fig. 1 gezeigt, durch eine Fläche 16 senkrecht zur Rotationsachse 4 oder durch einen - hier nicht gezeigten - linear oder gekrümmt verlaufenden Übergang erreicht werden. Der Fläche 16 oder ein anders gestalteter Übergang kann einen Anschlag für den inneren Lagerteil 10 und insbesondere deren zur Welle 6 weisenden Stirnfläche 18 beispielsweise für Fälle bereitstellen, bei denen die Welle 6 gegenüber der Rotationsachse 4 über ein zulässiges und/oder erwünschtes Maß hinaus verschwenkt. Ferner ermöglicht die Ausgestaltung mit verkleinertem Durchmesser wenigstens im Bereich des inneren Lagerteils 10 eine verkleinerte Bauform, wenigstens gegenüber Ausführungsformen ohne Änderung des Wellendurchmessers. Ausführungen zu möglichen Gestaltungen des Endes der Welle 6 finden sich weiter unter im Zusammenhang mit vorgesehenen Ausführungsformen des inneren Lagerteils 10.

Am Außenumfang der Welle 6 kann ein sich radial nach außen streckender, ringförmiger Ansatz 20 ausgebildet sein. Die zum Lager 8 weisende Seite des Ansatzes 20 kann koplanar mit der Stirnfläche 18 sein und mit dieser eine einheitliche Anschlagsfläche bereitstellen. Durch die aufgrund des Ansatzes 20 in Richtung radial nach außen verlängerte Anschlagsfläche kann - im Vergleich zu einer "nur" durch die Stirnfläche 18 gebildeten Anschlagsfläche - für eine stärker Begrenzung des Bereichs sorgen, in dem die Welle 6 gegenüber der Rotationsachse 4 zulässig und/oder erwünscht verschwenkbar ist.

Der äußere Lagerteil 12 ist darstellungsgemäß flanschartig ausgebildet und hat einen Befestigungsbereich 22, mit dem der äußere Lagerteil 12 an der Befestigungsstruktur 14 gesichert werden kann. Vorteilhafterweise ist der Befestigungsbereich 22 gestuft ausgeformt, um für eine verbesserte Sicherung an der Befestigungsstruktur 14 zu sorgen.

Ferner weist der aüßere Lagerteil 12 eine sich im Wesentlichen parallel zur Rotationsachse 4 erstreckende Lagerfläche 24 auf, die wenigstens teilweise mit einem reibungsreduzierenden Material oder Gleitlagermaterial 26 beschichtet und/oder wenigstens teilweise aus einem solchen Material aufgebaut ist.

Die Lagerfläche 24 ist zur Wirkverbindung mit dem inneren Lagerteil 10 vorgesehen und insbesondere mit einer Lagerfläche 28 desselben. Auch die Lagerfläche 28 kann wenigstens teilweise mit einem reibungsreduzierenden Material oder Gleitlagermaterial 30 beschichtet und/oder wenigstens teilweise aus einem solchen Material aufgebaut sein.

Des weiteren kann der äußere Lagerteil 12 eine ringförmige, sich radial nach innen erstreckende Lagerfläche 32 aufweisen, die ebenfalls zur Wirkverbindung mit dem inneren Lagerteil 10 vorgesehen ist. Ferner kann die Lagerfläche 32 eine Verlagerung des inneren Lagerteils 10 in Richtung parallel zur Rotationsachse 4 vermeiden. Die Lagerfläche 32 kann (auch) wenigstens teilweise ein reibungsreduzierendes Material oder Gleitlagermaterial 34 aufweisen und/oder wenigstens teilweise aus einem solchen Material aufgebaut.

Die Außenumfangsfläche des inneren Lagerteils 10 stellt wenigstens teilweise die Lagerfläche 28 zur Wirkverbindung mit der Lagerfläche 24 des äußeren Lagerteils 12 bereit. Die Lagerfläche 28 kann wenigstens teilweise mit einem reibungsreduzierenden Material oder Gleitlagermaterial 30 beschichtet und/oder wenigstens teilweise aus einem solchen Material aufgebaut sein. An Bereichen, die der Lagerfläche 32 des äußeren Lagerteils 12 gegenüber liegen und/oder bei Verwendung mit dieser in Kontakt treten können, umfasst der innere Lagerteil 10 vorzugsweise auch eine Lagerfläche 36, die gegebenenfalls wenigstens teilweise mit reibungsreduzierendem Material oder Gleitlagermaterial 38 versehen und/oder wenigstens teilweise aus einem solchen Material aufgebaut ist.

Die Innenumfangsfläche 40 des inneren Lagerteils 10 kann wenigstens teilweise mit reibungsreduzierendem Material oder Gleitlagermaterial versehen und/oder wenigstens teilweise aus einem solchen Material aufgebaut, um Reibung bei Kontakt mit der Welle 6 zu reduzieren, und/oder mit einem Material und/oder einer Oberflächenbeschaffenheit ausgestattet sein, den inneren Lagerteil 10 bei Kontakt mit der Welle 6 vor Beschädigung zu schützen. Auch kann die Welle 6 in Bereichen, die mit die Innenumfangsfläche 40 kontaktieren können, wenigstens teilweise mit reibungsreduzierendem Material oder Gleitlagermaterial versehen und/oder wenigstens teilweise aus einem solchen Material aufgebaut und/oder mit einem Material und/oder einer Oberflächenbeschaffenheit ausgestattet sein, um vor Beschädigung zu schützen.

Der innere Lagerteil 10 ist ringartig ausgestaltet, wobei die Außenumfangsfläche 24 des inneren Lagerteils 10 im Wesentlichen konzentrisch zu der Rotationsachse 4 ist. Bei der gezeigten Ausführungsform ist die Innenumfangsfläche 40 nicht konzentrisch zu der Rotationsachse 4, sondern zu einer Achse 42 konzentrisch, die parallel zu der Rotationsachse 4 (etwas) versetzt ist.

Bei solchen Ausführungsformen kann die Außenumfangsfläche 44 des Endes 12 der Welle 6, wie in Fig. 1 veranschaulicht, konzentrisch zu der Achse 42 ausgeformt sein. Dadurch wird erreicht, dass sich die Welle 6 um die Rotationsachse 4 und nicht um eine andere Achse dreht. Bei Ausführungsformen, bei denen die Außenumfangsfläche 44 des Endes 12 der Welle 6 konzentrisch zu der Rotationsachse 4 ist, würde sich eine Drehung der Welle 6 nicht um die Rotationsachse 4, sondern um eine andere Achse (z.B. die Achse 42) ergeben. In solchen Fällen kann man die Rotationsachse 4 als geometrische (gedachte,...) Rotationsachse der Welle und die bei Verwendung auftretende Rotationsachse als tatsächliche Rotationsachse betrachten. Dabei auftretende Kräfte (insbesondere Fliehkräfte) aufgrund der bezüglich der tatsächlichen Rotationsachse unwuchtigen Masseverteilung der Welle 6 können insbesondere bei Anwendungen genutzt werden, bei denen eine oder mehrere Unwuchtmassen an der Welle 6 angebracht sind (z.B. Schwingungserreger, Vibrator).

Bei nicht gezeigten Ausführungsformen ist die Innenumfangsfläche 40 des inneren Lagerteils 10 im Wesentlichen konzentrisch zu der Rotationsachse 4, während die Außenumfangsfläche 24 nicht konzentrisch zu der Rotationsachse, sondern zu einer Achse konzentrisch ist, die parallel zu der Rotationsachse (etwas) versetzt ist. In solchen Fällen kann durch entsprechende Ausgestaltung und/oder Positionierung des äußeren Lagerteils 12 eine Drehung der Welle 6 um die Rotationsachse 4 erreicht werden. Andernfalls können Ausführungsformen realisiert werden, bei denen bei Verwendung eine Drehung der Welle 6 um eine nicht mit der Rotationsachse 4 zusammenfallende Achse auftritt.

Bei Ausführungsformen mit nicht zur Rotationsachse 4 konzentrischer Innen- oder Außenumfangsfläche des inneren Lagerteils 10 hat der innere Lagerteil 10 unterschiedliche Wandstärken. Vorzugsweise ist in einem Bereich, der die größte oder größten Wandstärken umfasst, eine Aufnahme 46 ausgebildet. Bei Ausführungsformen mit einem insgesamt zur Rotationsachse 4 konzentrischen inneren Lagerteil, der eine im Wesentlichen konstante Wandstärke hat, kann die Aufnahme 46 an jeder Stelle vorgesehen sein; vorteilhafter Weise ist in solchen Fällen die Wandstärke des inneren Lagerteils 10 so zu bemessen, dass im Bereich der Aufnahme 46 eingeleitete Kräfte nicht zu Beschädigung führen.

Darstellungsgemäß ist die Aufnahme 46 als Ausnehmung im inneren Lagerteil 10 ausgebildet, die sich geradlinig in einer Richtung im Wesentlichen orthogonal zur Rotationsachse 4 erstreckt. Insbesondere ist die Ausnehmung 46 eine Nut mit im Wesentlichen kreissegmentförmigen Querschnitt (gemäß Fig. 1 halbkreisförmiger Querschnitt).

Die Aufnahme 46 ist zur teilweisen Anordnung eines Halte/Schwenk-Elements 48 vorgesehen. Das Halte/Schwenk-Element 48 ist ein Bolzen oder ein Stift, der so in die Aufnahme 46 eingepasst (z.B. durch Pressen, ...) werden kann, dass es einen sich über die Innenumfangsfläche 40 des inneren Lagerteils 10 hinaus erstreckenden Teil des Halte/Schwenk-Elements 48 gibt.

Der sich über die Innenumfangsfläche 40 des inneren Lagerteils 10 hinaus erstreckende Teil des Halte/Schwenk-Elements 48 ist, im zusammengebauten Zustand, in eine Aufnahme 50 in der Welle 6 (wenigstens teilweise) aufgenommen.

Bei den oben genannten Ausführungsformen sind das Halte/Schwenk-Element 48 und die Aufnahmen 46 und 50 vorzugsweise so ausgeformt, dass sich das Halte/Schwenk-Element 48 wenigstens in einer der Aufnahmen 46 und 50 so bewegen kann, dass die Welle 6 gegenüber der Rotationsachse 4 verschwenkbar ist. Dabei ist es möglich, dass das Halte/Schwenk-Element 48 in einer der Aufnahmen 46 und 50 fixiert ist und in der anderen Aufnahme 46 bzw. 50 bewegbar (z.B. drehbar, verschiebbar etc.) aufgenommen ist.

Die obigen Ausführungen hinsichtlich der Aufnahme 46 des inneren Lagerteils für die Aufnahme 50 entsprechend.

Die Kopplung von Welle 6 und innerem Lagerteil 10 mittels des Halte/Schwenk-Elements 48 verhindert einerseits, dass sich die Welle 6 und der innere Lagerteil 10 (und damit das Lager 8) relativ zu einander in Richtung parallel zu der Rotationsachse 4 verlagern können. Andererseits wird durch das Halte/Schwenk-Elements 48 erreicht, dass die Welle 6 und insbesondere das Ende 12 der Welle 6 gegenüber der Rotationsachse 4 schwenkbar ist.

Der Durchmesser der Innenumfangsfläche 40 des inneren Lagerteils 10 und/oder der Durchmesser der Außenumfangsfläche 44 des Wellenendes 12 sind so bemessen, dass sich im unverschwenkten Zustand der Welle 6 ein Zwischenraum oder Spalt 52 zwischen Innenumfangsfläche 40 und Außenumfangsfläche 44 ergibt. Die Größe dieses Zwischenraums oder Spalts 52 bestimmt, beispielsweise zusammen mit der Form und/oder Lage der Aufnahmen 46 und/oder 50 und/oder der Form des Halte/Schwenk-Elements 48, ein Maß, um das die Welle 6 gegenüber der Rotationsachse 4 verschwenkbar ist. Bei stärkerer Verschwenkung kontaktieren sich Innenumfangsfläche 40 und Außenumfangsfläche 44; die Welle 6 kann nicht weiter verschwenkt werden. Ergänzend oder alternativ kann eine Begrenzung der Verschwenkbarkeit mittels der Anschlagsfläche an der Welle 6 (s.o. Bezugszeichen 18 und 20) erreicht werden.

In dem äußeren Lagerteil 12 sind Bohrungen und/oder Kanäle 54 ausgebildet, über die Schmiermittel den oben genannten Lagerflächen 24, 28, 32, 36 und 40 zuzuführen. Die Bohrungen und/oder Kanäle 54 können über eine oder mehrere in der Befestigungsstruktur 14 ausgeformte Zuleitungen und/oder eine Drehdurchführung in der Welle 6 mit Schmiermittel versorgt werden.

Der beim Betrieb vorherrschende Druck durch Schmiermittel im Lager 8 (z.B. hydrodynamischer Öldruck) kann für (z.B. parallele) Ausrichtung des inneren Lagerteils 10 und des äußeren Lagerteils 12 zueinander sorgen. Insbesondere ist es vorgesehen, durch Schmiermittel und/oder dessen Zufuhr erzeugte Kräfte im Lager zu bemessen, dass auch bei Verschwenken der Welle 6 gegenüber der Rotationsachse 4 der innere Lagerteil 10 und der äußere Lagerteils 12 so zu einander ausgerichtet, dass sie ordnungsgemäß arbeiten und nicht übermäßig belastet werden.

Bei weiteren hier nicht gezeigten Ausführungsformen ist es vorgesehen, dass der innere Lagerteil 10 auf herkömmliche Weise mit dem Ende 12 der Welle 6 gekoppelt ist, beispielsweise durch eine Klemm-, Kleb-, Schweißverbindung und/oder form- und/oder kraftschlüssige Verbindung oder durch eine zwischen Welle 6 und innerem Lagerteil 10 angeordnete Verbindungsstruktur (z.B. eine an der Welle 6 angebrachte Lageraufnahme für den inneren Lagerteil 10). Bei solche Ausführungsformen wird eine Verschwenkbarkeit der Welle 6 gegenüber der Rotationsachse 4 erreicht, indem ein Halte/Schwenk-Element zwischen äußerem Lagerteil 12 und der Befestigungsstruktur 14 angeordnet wird.

Die Funktionsweise von unter Bezugnahme auf Fig. 1 beschriebenen Ausführungsformen ist wie folgt:
Drehungen der Welle 6 werden vom dem Lager 8 aufgenommen und gelagert. Treten bei Drehung der Welle 6 umlaufende Wellenverformungen und/oder Wellendurchbiegungen und in Folge davon umlaufende Schrägstellungen des Wellenendes auf, werden eine oder mehrere daraus resultierende Schwenkbewegungen oder verschwenkte Positionen durch die mittels des Halte/Schwenk-Elements 48 bereitgestellte "Schwenklagerung" aufgenommen und umlaufend, d.h. zusammen mit der Wellendrehzahl mitlaufend, ausgeglichen, weil durch das Halte/Schwenk-Element 48 eine Schwenklagerung bereitgestellt wird, die in einem Bereich vorliegt, der sich mit Wellendrehzahl dreht.

## Patentansprüche

1. Anordnung mit einer Welle (6) mit einem Ende und einer Lageranordnung, welche die Welle um eine Rotationsachse (4) drehbar aufnimmt, mit einem Lager (8), das einen inneren Lagerteil (10) zur Kopplung mit einem Ende der Welle (6) und einen äußeren Lagerteil (12) zur Kopplung mit einer Befestigungsstruktur (14) umfasst; und einem Halte/Schwenk-Element (48), über welches das Ende der Welle (6) mit dem inneren Lagerteil (10) verdrehsicher gekoppelt ist, wobei das Halte/Schwenk-Element (48) ausgeführt ist, um das Ende der Welle (6) gegen Bewegung in Richtung parallel zur Rotationsachse (4) relativ zu dem Lager (8) zu sichern und es zu ermöglichen, das Ende der Welle (6) gegenüber der Rotationsachse (4) zu verschwenken, wobei das Ende der Welle (6) eine Aufnahme (50) zur teilweisen Anordnung des Halte/Schwenk-Elements (48) darin auf-weist und der innere Lagerteil (10) eine Aufnahme (46) zur teilweisen Anordnung des Halte/Schwenk-Elements (48) darin aufweist und wobei das Halte/Schwenk-Element (48) einen Bolzen oder einen Stift umfasst.

2. Anordnung nach Anspruch 1, bei der die Aufnahme (46) zur Anordnung des Halte/Schwenk-Elements (48) eine Ausnehmung in einem bezüglich der Rotationsachse (4) radial inneren Bereich des inneren Lagerteils (10) umfasst, wobei vorzugsweise die Ausnehmung in einem Bereich des inneren Lagerteils (10) ausgebildet ist, der verglichen mit anderen Bereichen des inneren Lagerteils (10) in radialer Richtung bezüglich der Rotationsachse (4) dicker ist.

3. Anordnung nach Anspruch 1, bei der der äußere Lagerteil (12) eine Aufnahme zur teilweisen Anordnung des Halte/Schwenk-Elements (48) darin aufweist.

4. Anordnung nach Anspruch 2 oder 3, bei der die Aufnahme (46) zur Anordnung des Halte/Schwenk- Elements (48) eine Ausnehmung umfasst.

5. Anordnung nach Anspruch 4, bei der die Ausnehmung als Nut mit im Wesentlichen halbkreisförmigen oder kreissegmentförmigen Querschnitt ausgebildet ist; oder die Ausnehmung Wannen- oder topförmig oder artig ausgebildet ist; oder die Ausnehmung durch eine oder mehrere Flächen begrenzt ist, die die Oberfläche einer Halbkugel, eines Kugelabschnitts, eines Kegels, eines Kegelstumpfs oder eines Quaders beschreiben.

6. Lageranordnung nach einem der vorherigen Ansprüche, bei der der innere Lagerteil (10) zur Aufnahme eines einen Außendurchmesser aufweisenden Endbereichs der Welle (6) einen ringförmigen oder hohlzylindrischen Bereich mit einem Innendurchmesser umfasst, wobei der Innendurchmesser um ein vorbestimmtes Maß größer als der Außendurchmesser des Wellenendbereichs ist und das vorbestimmte Maß definiert, um wie viel die Welle (6) gegenüber der Rotationsachse (4) verschwenkt werden kann

7. Anordnung nach einem der vorherigen Ansprüche, bei der der äußere Lagerteil (12) eine sich im Wesentlichen parallel zur Rotationsachse (4) erstreckende Lagerfläche (24) zur Wirkverbindung mit dem inneren Lagerteil (10) aufweist; und/ oder der äußere Lagerteil (12) eine sich im Wesentlichen senkrecht zur Rotationsachse (4) erstreckende Lagerfläche (32) zur Wirkverbindung mit dem inneren Lagerteil (10) aufweist; und/ oder der der innere Lagerteil (12) eine sich im Wesentlichen parallel zur Rotationsachse (4) erstreckende Lagerfläche (28) zur Wirkverbindung mit dem äußeren Lagerteil (12) aufweist; und/ oder der innere Lagerteil (12) eine sich im Wesentlichen senkrecht zur Rotationsachse (4) erstreckende Lagerfläche (36) zur Wirkverbindung mit dem äußeren Lagerteil (12) aufweist; und/ oder der äußere Lagerteil (12) wenigstens eine Bohrung und/oder wenigstens einen Kanal (54) zur Schmiermittelzufuhr zur der wenigstens einen Lagerfläche (24, 28, 32, 36 und 40) umfasst.

8. Anordnung nach Anspruch 1, bei der die Aufnahme (50) der Welle (6) zur Anordnung des Halte/Schwenk-Elements (48) eine Ausnehmung in einem bezüglich der Rotationsachse (4) radial inneren Bereich des Endes (12) der Welle (6) umfasst.

9. Anordnung nach Anspruch 8, bei der die Aufnahme der Welle (6) zur Anordnung des Halte/Schwenk-Elements (48) eine Ausnehmung umfasst.

10. Anordnung nach Anspruch 8, bei der die Ausnehmung als Nut mit im Wesentlichen halbkreisförmigen oder kreissegmentförmigen Querschnitt ausgebildet ist; oder bei der die Ausnehmung Wannen- oder topförmig oder artig ausgebildet ist; oder bei die Ausnehmungen durch eine oder mehrere Flächen begrenzt ist, die die Oberfläche einer Halbkugel, eines Kugelabschnitts, eines Kegels, eines Kegelstumpfs oder eines Quaders beschreiben.

11. Anordnung nach einem der Ansprüche 8 bis 10, bei der das Ende (12) der Welle (6) einen Bereich mit einem ersten Durchmesser und einen Bereich mit einem zweiten Durchmesser aufweist, der kleiner als der erste Durchmesser ist, wobei der Bereich mit dem zweiten Durchmesser einen Wellenendbereich zur wenigstens teilweisen Aufnahme in dem Lager (8) definiert.

12. Anordnung nach Anspruch 11, bei der eine Übergang zwischen dem Bereich mit dem ersten Durchmesser und dem Bereich mit dem zweiten Durchmesser eine Anschlagsfläche (18, 20) umfasst.

13. Anordnung nach Anspruch 11 oder 12, bei der der Übergang zwischen dem Bereich mit dem ersten Durchmesser und dem Bereich mit dem zweiten Durchmesser eine im Wesentlichen senkrecht zur Rotationsachse (4) verlaufende Fläche (18, 20) oder einen Wellenbereich mit kontinuierlicher Durchmesseränderung umfasst.

14. Anordnung nach einem der Ansprüche 8 bis 13 bei der das Ende (12) der Welle (6) wenigstens eine Bohrung /oder wenigstens einen Kanal zur Schmiermittelzufuhr aufweist.

15. Schwingungserreger mit der Anordnung nach einem der vorgenannten Ansprüche mit wenigstens einer mittels der Welle (6) drehbaren Unwuchtmasse.

## Claims

1. Arrangement with a shaft (6) with an end and a bearing arrangement which receives the shaft rotatably around an axis of rotation (4), with a bearing (8) which comprises an inner bearing part (10) for coupling with one end of the shaft (6) and an outer bearing part (12) for coupling to a fixing structure (14); and a retaining-pivoting element (48) via which the end of the shaft (6) is coupled with the inner bearing part (10) in such a way that it is prevented from twisting, where the retaining-pivoting element (48) is formed in such a way as to secure the end of the shaft (6) against movement in a direction parallel to the axis of rotation (4) in relation to the bearing (8) and in such a way as to allow the end of the shaft (6) to pivot with reference to the axis of rotation (4), where the end of the shaft (6) has a seat (50) for partial arrangement of the retaining-pivoting element (48) therein and where the inner bearing part (10) has a seat (46) for partial arrangement of the retaining-pivoting element (48) therein and where the retaining-pivoting element (48) comprises a bolt or a pin.

2. Arrangement in accordance with claim 1, where the seat (46) for locating the retaining-pivoting element (48) comprises a recess in a radially inner area of the inner bearing part (10) with reference to the axis of rotation (4), where preferably the recess is formed in an area of the inner bearing part (10) which is thicker in comparison with other areas of the inner bearing part (10) in a radial direction with reference to the axis of rotation (4).

3. Arrangement in accordance with claim 1 where the outer bearing part (12) has a seat for the partial location of the retaining-pivoting element (48) therein.

4. Arrangement in accordance with claim 2 or claim 3 where the seat (46) for locating the retaining-pivoting element (48) comprises a recess.

5. Arrangement in accordance with claim 4, where the recess has the form of a groove with a cross section which is shaped substantially as a semi-circle or segment of a circle; or the recess is pot or tub-like in shape; or the recess is delimited by one or several surfaces which describe the surface of a hemisphere, a segment of a sphere, a cone, a truncated cone or a rectangle.

6. Bearing arrangement in accordance with any of the aforementioned claims, where the inner bearing part (10) has a ring-shaped or hollow-cylindrical area with an inner diameter for receiving an end area of shaft (6) with an outer diameter, where the inner diameter is exceeds the outer diameter of the end area of the shaft by a pre-determined amount, and where this pre-determined dimension defines the extent to which the shaft (6) can be pivoted with reference to the axis of rotation (4).

7. Arrangement in accordance with any of the aforementioned claims, where the outer bearing part (12) has a bearing surface (24) extending substantially parallel to the axis of rotation (4) for operative connection with the inner bearing part (10); and/or the outer bearing part (12) has a bearing surface (32) extending substantially perpendicular to the axis of rotation (4) for operative connection with the inner bearing part (10); and/or the inner bearing part (10) has a bearing surface (28) extending substantially parallel to the axis of rotation (4) for operative connection with the outer bearing part (12); and/or the inner bearing part (10) has a bearing surface (36) extending substantially perpendicular to the axis of rotation (4) for operative connection with the outer bearing part (12); and/or the outer bearing part (12) comprises at least one bore and/or at least one duct (54) for supplying lubricant to the bearing surface or bearing surfaces (24, 28, 32, 36 and 40).

8. Arrangement in accordance with claim 1 where the seat (50) of the shaft (6) for locating the retaining-pivoting element (48) comprises a recess in a radially inner area at the end (12) of the shaft (6) with reference to the axis of rotation (4).

9. Arrangement in accordance with claim 8 where the seat of the shaft (6) for locating the retaining-pivoting element (48) comprises a recess.

10. Arrangement in accordance with claim 8 where the recess is formed as a groove with a cross section shaped like a semicircle or a segment of a circle; or where the recess is pot or tub-like in shape; or where the recess is delimited by one or several surfaces which describe the surface of a hemisphere, a segment of a sphere, a cone, a truncated cone or a rectangle.

11. Arrangement in accordance with any of the claims 8 to 10 where the end 12 of the shaft (6) has an area with a first diameter and an area with a second diameter which is smaller than the first diameter, where the area with the second diameter defines a shaft-end area for fitting at least partially into the bearing (8).

12. Arrangement in accordance with claim 11 where a transition between the area with the first diameter and the area with the second diameter comprises a stopping face (18, 20).

13. Arrangement in accordance with claim 11 or claim 12, where the transition between the area with the first diameter and the area with the second diameter comprises a surface (18, 20) running substantially perpendicular to the axis of rotation (4), or a shaft area with a continuously changing diameter.

14. Arrangement in accordance with any of the claims 8 to 13, where the end (12) of the shaft (6) has at least one bore or at least one duct for the supply of lubricant.

15. Vibration generator with the arrangement described in any of the aforementioned claims, with at least one unbalanced mass being rotated by means of the shaft (6).

## Revendications

1. Agencement composé d'une extrémité d'arbre (6) et d'un agencement de palier recevant l'arbre tout en lui permettant de tourner selon un axe de rotation (4), d'un palier (8) comprenant une partie intérieure (10) de palier à coupler avec une extrémité de l'arbre (6) et une partie extérieure (12) de palier à coupler avec une structure de fixation (14); et composé d'un élément de retenue / pivotement (48) via lequel l'extrémité de l'arbre (6) est couplée de manière sécurisée en torsion avec la partie intérieure (10) de palier, sachant que l'élément de retenue / pivotement (48) est réalisé de façon à sécuriser l'extrémité de l'arbre (6) pour empêcher son déplacement parallèlement à l'axe de rotation (4) relativement au palier (8), et pour permettre à l'extrémité de l'arbre (6) de pivoter par rapport à l'axe de rotation (4), sachant que l'extrémité de l'arbre (6) présente un réceptacle (50) permettant d'agencer dedans, partiellement, l'élément de retenue / pivotement (48), et que la partie intérieure (10) de palier présente un réceptacle (46) pour agencer dedans partiellement l'élément de retenue / pivotement (48), et sachant que l'élément de retenue / pivotement (48) comprend un goujon ou une tige.

2. Agencement selon la revendication 1, dans lequel le réceptacle (46) d'agencement de l'élément de retenue / pivotement (48) présente un évidement dans une zone radiale intérieure de la partie intérieure (10) de palier considérée relativement à l'axe de rotation (4), sachant que l'évidement est configuré de préférence dans une zone de la partie intérieure (10) de palier qui, comparée à d'autres zones de la partie intérieure de palier (10), est plus épaisse dans le sens radial relativement à l'axe de rotation (4).

3. Agencement selon la revendication 1, dans lequel la partie extérieure (12) de palier présente un réceptacle permettant d'agencer dedans, partiellement, l'élément de retenue / pivotement (48).

4. Agencement selon la revendication 2 ou 3, dans lequel le réceptacle (46) destiné à l'agencement de l'élément de retenue / pivotement (48) comprend un évidement.

5. Agencement selon la revendication 4, dans lequel l'évidement est configuré en gorge d'une section essentiellement semi-circulaire ou en arc de cercle ; ou dans lequel l'évidement est configuré en forme de bac ou de pot ou d'un type apparenté à un bac ou un pot ; ou dans lequel l'évidement est délimité par une ou plusieurs surfaces décrivant la surface d'un hémisphère, d'une fraction de sphère, d'un cône, d'un élément tronconique ou d'un parallélépipède.

6. Agencement selon l'une des revendications précédentes, dans lequel la partie intérieure (10) de palier comprend, pour recevoir une zone terminale de l'arbre (6) présentant un diamètre extérieur, une zone annulaire ou cylindrique creuse présentant un diamètre intérieur, sachant que le diamètre intérieur dépasse d'un quantum prédéterminé le diamètre extérieur de la zone terminale de l'arbre et qu'il définit le quantum prédéterminé de pivotement pouvant être imprimé à l'arbre (6) par rapport à l'axe de rotation (4).

7. Agencement selon l'une des revendications précédentes, dans lequel la partie extérieure (12) de palier présente une surface d'appui (24) qui s'étend pour l'essentiel parallèlement à l'axe de rotation (4) pour établir une liaison opérante avec la partie intérieure (10) de palier ; et/ou dans lequel la partie extérieure (12) de palier présente une surface d'appui (32) qui s'étend pour l'essentiel perpendiculairement à l'axe de rotation (4) pour établir une liaison opérante avec la partie intérieure (10) du palier ; et/ou dans lequel la partie intérieure (12) de palier présente une surface d'appui (28) qui s'étend parallèle à l'axe de rotation (4) pour établir une liaison opérante avec la partie extérieure (12) de palier; et/ou dans lequel la partie intérieure (12) de palier présente une surface d'appui (36) qui s'étend pour l'essentiel perpendiculairement à l'axe de rotation (4) pour établir une liaison opérante avec la partie extérieure (12) de palier ; et/ou dans lequel la partie extérieure (12) de palier comprend au moins un alésage et/ou au moins un canal (54) pour alimenter au moins une surface d'appui (24, 28, 32, 36 et 40) en lubrifiant.

8. Agencement selon la revendication 1, dans lequel le réceptacle (50) de l'arbre (6) permettant d'agencer l'élément de retenue / pivotement (48) comprend un évidement situé, relativement à l'axe de rotation (4), dans une zone radiale interne de l'extrémité (12) de l'arbre (6).

9. Agencement selon la revendication 8, dans lequel le réceptacle de l'arbre (6) comprend un évidement permettant d'agencer l'élément de retenue / pivotement (48).

10. Agencement selon la revendication 8, dans lequel l'évidement est configuré en gorge d'une section essentiellement semi-circulaire ou en arc de cercle ; ou dans lequel l'évidement est configuré en forme de bac ou de pot ou d'un type apparenté à un bac ou un pot ; ou dans lequel l'évidement est délimité par une ou plusieurs surfaces décrivant la surface d'un hémisphère, d'une fraction de sphère, d'un cône, d'un élément tronconique ou d'un parallélépipède.

11. Agencement selon l'une des revendications 8 à 10, dans lequel l'extrémité (12) de l'arbre (6) comporte une zone présentant un premier diamètre et une zone présentant un second diamètre inférieur au premier, sachant que la zone présentant le second diamètre définit une zone terminale d'arbre à recevoir au moins en partie dans le palier (8).

12. Agencement selon la revendication 11, dans laquelle une transition entre la zone présentant le premier diamètre et la zone présentant le second diamètre comprend une surface butée (18, 20).

13. Agencement selon la revendication 11 ou 12, dans lequel la transition entre la zone présentant le premier diamètre et la zone présentant le second diamètre comprend une surface (18, 20) essentiellement perpendiculaire à l'axe de rotation (4) ou une zone d'arbre à modification progressive du diamètre.

14. Agencement selon l'une des revendications 8 à 13, dans lequel l'extrémité (12) de l'arbre (6) présente au moins un alésage ou au moins un canal permettant l'amenée du lubrifiant.

15. Générateur de vibrations présentant l'agencement selon l'une des revendications précédentes, comprenant au moins une masse de balourd pouvant entrer en rotation au moyen de l'arbre (6).
